(19) Europäisches Patentamt
European Patent Office
Office européen des brevets

(11) **EP 3 638 725 B1**

(12) **EUROPÄISCHE PATENTSCHRIFT**

(45) Veröffentlichungstag und Bekanntmachung des Hinweises auf die Patenterteilung:
**25.08.2021   Patentblatt 2021/34**

(51) Int Cl.:
*C08K 5/17* *(2006.01)*          *C08L 75/00* *(2006.01)*
*B29C 67/00* *(2017.01)*          *B33Y 10/00* *(2015.01)*

(21) Anmeldenummer: **18729443.4**

(22) Anmeldetag: **13.06.2018**

(86) Internationale Anmeldenummer:
**PCT/EP2018/065593**

(87) Internationale Veröffentlichungsnummer:
**WO 2018/229095 (20.12.2018 Gazette 2018/51)**

(54) **ADDITIVES FERTIGUNGSVERFAHREN UNTER VERWENDUNG VON AMINEN ZUR NACHHÄRTUNG**

ADDITIVE PRODUCTION METHOD USING AMINES FOR POST-CURING

PROCÉDÉ DE FABRICATION ADDITIVE FAISANT APPEL AUX AMINES POUR LE POST-DURCISSEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.06.2017   EP 17176094**

(43) Veröffentlichungstag der Anmeldung:
**22.04.2020   Patentblatt 2020/17**

(73) Patentinhaber: **Covestro Deutschland AG**
**51373 Leverkusen (DE)**

(72) Erfinder:
• **ACHTEN, Dirk**
  **51375 Leverkusen (DE)**
• **BÜSGEN, Thomas**
  **51377 Leverkusen (DE)**
• **EGGERT, Christoph**
  **50733 K ln (DE)**
• **LAAS, Hans-Josef**
  **51519 Odenthal (DE)**
• **STEMPFLE, Florian, Johannes**
  **50825 K ln (DE)**
• **LUDEWIG, Michael**
  **51519 Odenthal (DE)**

(74) Vertreter: **Levpat**
**c/o Covestro AG**
**Gebäude 4825**
**51365 Leverkusen (DE)**

(56) Entgegenhaltungen:
**WO-A1-2015/200173          WO-A1-2016/085914
CN-A- 105 778 423**

EP 3 638 725 B1

**Beschreibung**

Die vorliegende Erfindung betrifft ein Verfahren zur Herstellung eines Gegenstands, umfassend den Schritt der Herstellung des Gegenstands in einem additiven Herstellungsverfahren aus dem Aufbaumaterial des vorliegenden Anspruchs 1. Die Erfindung betrifft ebenfalls ein durch das erfindungsgemäße Verfahren erhältlichen Gegenstand.

Als additive Fertigungsverfahren werden solche Verfahren bezeichnet, mit denen Gegenstände schichtweise aufgebaut werden. Sie unterscheiden sich daher deutlich von anderen Verfahren zur Herstellung von Gegenständen wie Fräsen oder Bohren. Bei letztgenannten Verfahren wird ein Gegenstand so bearbeitet, dass er durch Wegnahme von Material seine Endgeometrie erhält. Additive Fertigungsverfahren nutzen unterschiedliche Materialien und Prozesstechniken, um Gegenstände schichtweise aufzubauen. Beim sogenannten Fused Deposition Modeling (FDM) beispielsweise wird ein thermoplastischer Kunststoffdraht verflüssigt und mit Hilfe einer Düse schichtweise auf einer beweglichen Bauplattform abgelegt. Beim Erstarren entsteht ein fester Gegenstand. Die Steuerung der Düse und der Bauplattform erfolgt auf der Grundlage einer CAD-Zeichnung des Gegenstands. Ist die Geometrie dieses Gegenstands komplex, zum Beispiel mit geometrischen Hinterschneidungen, müssen zusätzlich Stützmaterialien mitgedruckt und nach Fertigstellung des Gegenstands wieder entfernt werden.

Daneben existieren additive Fertigungsverfahren, welche thermoplastische Pulver nutzen, um Gegenstände schichtweise aufzubauen. Hierbei werden über einen so genannten Beschichter dünne Pulverschichten aufgetragen und anschließend mittels einer Energiequelle selektiv aufgeschmolzen. Das umgebende Pulver stützt dabei die Bauteilgeometrie. Komplexe Geometrien sind dadurch wirtschaftlicher zu fertigen als beim zuvor beschrieben FDM-Verfahren. Zudem können verschiedene Gegenstände eng gepackt im so genannten Pulverbett angeordnet beziehungsweise gefertigt werden. Aufgrund dieser Vorteile gelten pulverbasierte additive Fertigungsverfahren zu den wirtschaftlichsten additiven Herstellungsverfahren am Markt. Sie werden daher überwiegend von industriellen Nutzern verwendet. Beispiele für pulverbasierte additive Fertigungsverfahren sind das sogenannte Lasersintern (SLS, Selective Laser Sintering) oder das High Speed Sintering (HSS). Sie unterscheiden sich untereinander in der Methode, um die Energie für das selektive Aufschmelzen in den Kunststoff einzutragen. Beim Lasersinterverfahren erfolgt der Energieeintrag über einen gelenkten Laserstrahl. Beim so genannten High Speed Sintering (HSS)-Verfahren (EP 1648686) erfolgt der Energieeintrag über Infrarot (IR)-Strahler in Kombination mit einem selektiv in das Pulverbett gedruckten IR-Absorber. Das so genannte Selective Heat Sintering (SHS) nutzt die Druckeinheit eines konventionellen Thermodruckers, um thermoplastische Pulver selektiv aufzuschmelzen.

Eine weitere Gruppe von additiven Fertigungsverfahren setzt radikalisch vernetzbare Harze ein, welche gegebenenfalls über einen zweiten Härtungsmechanismus ihre Endfestigkeit im gebildeten Gegenstand erhalten. Beispiele für solche Verfahren sind Stereolithographieverfahren und das davon abgeleitete sogenannte DLP-Verfahren.

Im technischen Gebiet der Beschichtungen sind sogenannte "dual cure"-Systeme bekannt, z.B. aus WO 2015/200173, bei denen das flüssig aufgetragene Beschichtungsmaterial zunächst radikalisch, beispielsweise photochemisch, vernetzt wird und anschließend über Reaktionen von NCO-Gruppen mit geeigneten Reaktionspartnern weiter aushärten.

Eine Aufgabe der vorliegenden Erfindung ist es, mindestens einen Nachteil des Standes der Technik wenigstens zu einem Teil zu überwinden. Weiterhin stellt sich die Erfindung die Aufgabe, ein additives Fertigungsverfahren bereitzustellen, bei dem die herzustellenden Gegenstände möglichst kosteneffizient und/oder individualisiert und/oder ressourcenschonend erhalten werden können.

Erfindungsgemäß gelöst wird die Aufgabe durch ein Verfahren gemäß Anspruch 1 und einen Gegenstand gemäß Anspruch 8. Vorteilhafte Weiterbildungen sind in den Unteransprüchen angegeben. Sie können beliebig kombiniert werden, sofern sich aus dem Kontext nicht eindeutig das Gegenteil ergibt.

Ein Verfahren zur Herstellung eines Gegenstands, umfassend den Schritt der Herstellung des Gegenstands in einem additiven Herstellungsverfahren aus einem Aufbaumaterial gemäß Anspruch 1, zeichnet sich dadurch aus, dass das Aufbaumaterial weiterhin eine Polyaminkomponente umfasst und dass während und/oder nach der Herstellung des Gegenstands das Aufbaumaterial auf eine Temperatur von $\geq$ 50 °C erwärmt wird.

Durch das Erwärmen des Aufbaumaterials auf eine Temperatur von $\geq$ 50 °C, vorzugsweise $\geq$ 50 °C bis $\leq$ 180 °C und mehr bevorzugt $\geq$ 70 °C bis $\leq$ 170 °C findet (gegebenenfalls in Gegenwart von Urethanisierungskatalysatoren und/ oder Umesterungskatalysatoren) eine chemische Reaktion im Aufbaumaterial statt. Die durch Addition gebildeten Urethangruppen können sich unter diesen Bedingungen, wenigstens teilweise, reversibel öffnen, wodurch freie NCO-Gruppen zur Reaktion mit den Aminogruppen der Polyaminkomponente unter Bildung von Harnstoffgruppen zur Verfügung stehen. Auf diese Weise kann das durchschnittliche Molekulargewicht des Polyurethanpolymers erhöht werden. Im Fall von Polyaminen mit einer durchschnittlichen Funktionalität von > 2 kann weiterhin die Vernetzungsdichte im Aufbaumaterial erhöht werden. Wenn das Polyurethanpolymer wenigstens teilweise aus Polyesterpolyolen aufgebaut ist, kann als weitere Reaktion auch die Öffnung der Esterbindungen und Reaktion mit Polyaminen zu Amiden ablaufen. Auch hierdurch kann eine Nachhärtung des Aufbaumaterials erreicht werden. Das Gleiche gilt, wenn das Aufbaumaterial ein Polyesterpolymer umfasst.

Erfindungsgemäß einsetzbare Katalysatoren sind dabei solche, die die Urethanisierungsreaktion sowie auch die Rückreaktion zu Isocyanaten und Polyolen und/oder eine Amidierung der Urethanbindung zu Harnstoffen beschleunigen, und/oder solche, die eine Amidierung von Estergruppen zu Amiden beschleunigen. Geeignete Katalysatoren dafür sind dem Fachmann bekannt und können sowohl unter sauren, basischem als auch neutralem pH Bedingungen wirksam sein. In einer bevorzugten Variante wird die Umamidierungsreaktion ohne Zugabe von zusätzlichen Katalysatoren durchgeführt.

Das Erwärmen des Gegenstands kann für eine Zeitspanne von $\geq$ 1 Minute, bevorzugt $\geq$ 5 Minuten, mehr bevorzugt $\geq$ 10 Minuten bis $\leq$ 24 Stunden bevorzugt $\leq$ 8 Stunden, besonders bevorzugt < 4 Stunden, erfolgen.

Geeignete Amine für die Polyaminkomponente sind insbesondere aliphatische Polyamine mit einer durchschnittlichen Aminfunktionalität von $\geq$ 2, vorzugsweise symmetrische aliphatische Polyamine mit einer durchschnittlichen Aminfunktionalität von $\geq$ 2 (lineare oder alizyklische Polyamine mit festen Geometrien bezüglich ihrer *cis*- oder *trans*-Konfigurationen).

Die NCO-Gruppen im Polyurethan-Polymer des Aufbaumaterials können teilweise blockiert sein. Dann umfasst das erfindungsgemäße Verfahren weiterhin den Schritt des Deblockierens dieser NCO-Gruppen. Nach ihrer Deblockierung stehen sie so für weitere Reaktionen zur Verfügung.

Das Blockierungsmittel wird so gewählt, dass bei Erwärmung im erfindungsgemäßen Verfahren die NCO-Gruppen wenigstens teilweise deblockieren. Beispiele für Blockierungsmittel sind Alkohole, Lactame, Oxime, Malonester, Alkylacetoacetate, Triazole, Phenole, Imidazole, Pyrazole sowie Amine, wie z.B. Butanonoxim, Diisopropylamin, 1,2,4-Triazol, Dimethyl-1,2,4-triazol, Imidazol, Malonsäurediethylester, Acetessigester, Acetonoxim, 3,5-Dimethylpyrazol, $\varepsilon$-Caprolactam, N-Methyl-, N-Ethyl-, N-(Iso)propyl-, N-n-Butyl-, N-iso-Butyl-, N-tert.-Butyl-benzylamin oder 1,1-Dimethylbenzylamin, N-Alkyl-N-1,1- Dimethylmethylphenylamin, Addukte von Benzylamin an Verbindungen mit aktivierten Doppelbindungen wie Malonsäureestern, N,N-Dimethylaminopropylbenzylamin und andere tertiäre Aminogruppen enthaltende gegebenenfalls substituierte Benzylamine und/oder Dibenzylamin oder beliebige Gemische dieser Blockierungsmittel.

Geeignete Polyesterpolymere können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren wie Bernsteinsäure, Glutarsäure, Adipinsäure, Korksäure, Azelainsäure und Sebacinsäure, oder aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyesterpolymere kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, z:B. Ethylenglykol, Diethylenglykol, 1 ,4-Butandiol, 1,5-Pentandiol, 1 ,6- Hexandiol, 1,10-Decandiol, 2,2-Dimethyl-1,3-propandiol, 1,3-Propandiol oder Dipropylenglykol. Je nach den gewünschten Eigenschaften können die mehrwertigen Alkohole allein oder in Mischung untereinander verwendet werden. Geeignet sind ferner Ester der Kohlensäure mit den genannten Diolen, insbesondere solchen mit 4 bis 6 Kohlenstoffatomen, wie 1 ,4-Butandiol oder 1,6-Hexandiol, Kondensationsprodukte von $\omega$-Hydroxycarbonsäuren wie $\omega$-Hydroxycapronsäure oder Polymerisationsprodukte von Lactonen, z.B. gegebenenfalls substituierten $\omega$-Caprolacton. Als Polyesterpolymere vorzugsweise verwendet werden Ethandiolpolyadipate, 1,4-Butandiolpolyadipate, Ethandiol-1 ,4-Butandiolpolyadipate, 1,6-Hexandiolneopentylglykolpolyadipate, 1,6-Hexandiol-1,4-butandiolpolyadipate und Polycaprolactone. Die Polyesterpolymere besitzen bevorzugt zahlenmittlere Molukulargewichte Mn von 450 bis 6000 g/mol und können einzeln oder in Form von Mischungen untereinander zur Anwendung kommen.

In einer besonderen Ausführungsform hat das Aufbaumaterial einen Gewichtsanteil an Polyurethangruppen (NHCOO) von $\geq$ 2%, bevorzugt $\geq$ 4%, bevorzugt $\geq$ 6% , bevorzugt $\geq$ 8%, bevorzugt $\geq$ 10% und $\leq$ 35%, und/oder Estergruppen (COO) von $\geq$ 2%, bevorzugt $\geq$ 4%, bevorzugt $\geq$ 6% , bevorzugt $\geq$ 8%, bevorzugt $\geq$ 10% und $\leq$ 30%. Der Gewichtsanteil der Polyurethan oder Polyestergruppen, bezogen auf das Gesamtgewicht des Aufbaumaterials wird über IR-Spektroskopie und/oder $^{13}$C-NMR-Spektroskopie bestimmt.

In der vorliegenden Erfindung ist das Aufbaumaterial radikalisch vernetzbar und umfasst Gruppen mit Zerewitinoff-aktiven H-Atomen, der Gegenstand wird aus einem Vorläufer erhalten und das Verfahren umfasst die Schritte:

I) Abscheiden von radikalisch vernetztem Aufbaumaterial auf einem Träger, so dass eine Lage eines mit dem Träger verbundenen Aufbaumaterials erhalten wird, welche einem ersten ausgewählten Querschnitt des Vorläufers entspricht;

II) Abscheiden von radikalisch vernetztem Aufbaumaterial auf eine zuvor aufgetragene Lage des Aufbaumaterials, so dass eine weitere Lage des Aufbaumaterials erhalten wird, welche einem weiteren ausgewählten Querschnitt des Vorläufers entspricht und welche mit der zuvor aufgetragenen Lage verbunden ist;

III) Wiederholen des Schritts II), bis der Vorläufer gebildet ist;

wobei das Abscheiden von radikalisch vernetztem Aufbaumaterial wenigstens in Schritt II) durch Belichten und/oder Bestrahlen eines ausgewählten Bereichs eines radikalisch vernetzbaren Aufbaumaterials, entsprechend dem jeweils ausgewählten Querschnitt des Vorläufers, erfolgt und wobei das radikalisch vernetzbare Aufbaumaterial eine Viskosität (23 °C, DIN EN ISO 2884-1) von ≥ 5 mPas bis ≤ 100000 mPas aufweist,
wobei das radikalisch vernetzbare Aufbaumaterial dem Anspruch 1 entspricht, und nach Schritt III) weiterhin Schritt IV) durchgeführt wird:
IV) Erwärmen des nach Schritt III) erhaltenen Vorläufers auf eine Temperatur von ≥ 50 °C (vorzugsweise ≥ 50 °C bis ≤ 180 °C und mehr bevorzugt ≥ 70 °C bis ≤ 170 °C), so dass der Gegenstand erhalten wird.

In dieser Variante wird somit der Gegenstand in zwei Herstellungsabschnitten erhalten. Der erste Herstellungsabschnitt kann als Aufbauabschnitt angesehen werden. Dieser Aufbauabschnitt lässt sich mittels strahlenoptischer additiver Fertigungsverfahren wie dem Inkjet-Verfahren, der Stereolithographie oder dem DLP (digital light processing)-Verfahren realisieren und ist Gegenstand der Schritte I), II) und III). Der zweite Herstellungsabschnitt kann als Härtungsabschnitt angesehen werden und ist Gegenstand des Schritts IV). Hier wird der nach dem Aufbauabschnitt erhaltene Vorläufer oder intermediäre Gegenstand ohne seine Form weiter zu verändern in einen mechanisch dauerhafteren Gegenstand überführt.

In Schritt I) dieser Variante des Verfahrens erfolgt das Abscheiden eines radikalisch vernetzten Aufbaumaterials auf einem Träger. Dieses ist gewöhnlich der erste Schritt in Inkjet-, Stereolithographie- und DLP-Verfahren. Auf diese Weise wird eine Lage eines mit dem Träger verbundenen Aufbaumaterials erhalten, welche einem ersten ausgewählten Querschnitt des Vorläufers entspricht.

Gemäß der Anweisung von Schritt III) wird Schritt II) so lange wiederholt, bis der gewünschte Vorläufer gebildet ist. In Schritt II) erfolgt das Abscheiden eines radikalisch vernetzten Aufbaumaterials auf eine zuvor aufgetragene Lage des Aufbaumaterials, so dass eine weitere Lage des Aufbaumaterials erhalten wird, welche einem weiteren ausgewählten Querschnitt des Vorläufers entspricht und welche mit der zuvor aufgetragenen Lage verbunden ist. Bei der zuvor aufgetragenen Lage des Aufbaumaterials kann es sich um die erste Lage aus Schritt I) oder um eine Lage aus einer vorigen Durchlauf des Schritts II) handeln.

Es ist in dieser Verfahrensvariante vorgesehen, dass das Abscheiden eines radikalisch vernetzten Aufbaumaterials wenigstens in Schritt II) (vorzugsweise auch in Schritt I) durch Belichten und/oder Bestrahlen eines ausgewählten Bereichs eines radikalisch vernetzbaren Harzes, entsprechend dem jeweils ausgewählten Querschnitt des Gegenstandes, erfolgt. Dieses kann sowohl durch selektives Belichten (Stereolithographie, DLP) des vernetzbaren Aufbaumaterials als auch durch selektives Auftragen des vernetzbaren Aufbaumaterials, gefolgt von einem Belichtungsschritt, der aufgrund des vorigen selektiven Auftragens des vernetzbaren Aufbaumaterials nicht mehr selektiv sein muss (Inkjet-Verfahren).

Im Kontext dieser Verfahrensvariante werden die Begriffe "radikalisch vernetzbares Aufbaumaterial" und "radikalisch vernetztes Aufbaumaterial" benutzt. Hierbei wird das radikalisch vernetzbare Aufbaumaterial durch das Belichten und/oder Bestrahlen, welches radikalische Vernetzungsreaktionen auslöst, in das radikalisch vernetzte Aufbaumaterial überführt. Unter "Belichten" wird hierbei die Einwirkung von Licht im Bereich zwischen nahem IR- und nahem UV-Licht (1400 nm bis 315 nm Wellenlänge) verstanden. Die übrigen kürzeren Wellenlängenbereiche werden durch den Begriff "Bestrahlen" abgedeckt, zum Beispiel fernes UV-Licht, Röntgenstrahlung, Gammastrahlung und auch Elektronenstrahlung.

Das Auswählen des jeweiligen Querschnitts erfolgt zweckmäßigerweise durch ein CAD-Programm, mit dem ein Modell des herzustellenden Gegenstandes erzeugt wurde. Diese Operation wird auch "Slicing" genannt, und dient als Grundlage für die Steuerung der Belichtung und/oder Bestrahlung des radikalisch vernetzbaren Harzes.

Das radikalisch vernetzbare Aufbaumaterial weist in dieser Verfahrensvariante eine Viskosität (23 °C, DIN EN ISO 2884-1) von ≥ 5 mPas bis ≤ 100000 mPas auf. Somit ist es zumindest für die Zwecke der additiven Fertigung als flüssiges Harz anzusehen. Vorzugsweise beträgt die Viskosität ≥ 50 mPas bis ≤ 10000 mPas, mehr bevorzugt ≥ 500 mPas bis ≤ 5000 mPas.

Neben der härtbaren Komponente kann das radikalisch vernetzbare Aufbaumaterial auch eine nicht härtbare Komponente umfassen, in der beispielsweise Stabilisatoren, Füllstoffe und dergleichen zusammengefasst sind.

In dieser Variante des Verfahrens wird weiterhin nach Schritt III) weiterhin Schritt IV) durchgeführt. In diesem Schritt erfolgt das Erwärmen des nach Schritt III) erhaltenen Vorläufers auf eine Temperatur von ≥ 50 °C (vorzugsweise ≥ 50 °C bis ≤ 180 °C und mehr bevorzugt ≥ 70 °C bis ≤ 170 °C), so dass der Gegenstand erhalten wird. Das Erwärmen kann für eine Zeitspanne von ≥ 1 Minute, bevorzugt ≥ 5 Minuten, mehr bevorzugt ≥ 10 Minuten bis ≤ 24 Stunden bevorzugt ≤ 8 Stunden, besonders bevorzugt < 4 Stunden, erfolgen.

Vorzugsweise wird die Reaktion durchgeführt, bis ≤ 20%, bevorzugt ≤ 10% und mehr bevorzugt ≤ 5% der ursprünglich vorhandenen Amin-Gruppen noch vorhanden sind. Dieses lässt sich mittels quantitativer IR-Spektroskopie bestimmen.

Es ist weiterhin bevorzugt, dass die Reaktion der Aminogruppen mit den Urethan- und/oder Estergruppen zu einer Zunahme der Vernetzungsdichte, gemessen als Zunahme des Speichermoduls G' in der Schmelze des Produktes führt (DMA, Platte/Platte-Oszillationsviskosimeter gemäß ISO 6721-10 bei 20 °C über der Glasübergangstemperatur oder der Schmelztemperatur des Produktes und bei einer Scherrate von 1/s).

Es ist weiterhin bevorzugt, dass die Reaktionsprodukte aus der Reaktion des Amins mit Urethan- und/oder Estergruppen zu Spaltungsprodukten mit einem Molekulargewicht > 300 g/ mol und weiter bevorzugt zu ≥ 50 Gewichts% zu nicht extrahierbaren Spaltungsprodukten führt. Das Molekulargewicht und der extrahierbare Gewichtsanteil der Spaltungsprodukte mit typischen OH Endgruppen, wird dabei durch Extraktion mit einem polaren Lösungsmittel wie Aceton und durch anschließende Molekulargewichstbestimmung des Extraktes mittels Gelpermeationschromatographie bestimmt.

Es ist bevorzugt, dass Schritt IV) erst dann durchgeführt wird, wenn das gesamte Aufbaumaterial des Vorläufers seinen Gelpunkt erreicht hat. Der Gelpunkt wird als erreicht angesehen, wenn in einer dynamisch-mechanischen Analyse (DMA) mit einem Platte/Platte-Oszillationsviskosimeter gemäß ISO 6721-10 bei einer Temperatur von > 20 °C über der Glasübergangstemperatur/Schmelztemperatur sich die Graphen des Speichermoduls G' und des Verlustmoduls G" kreuzen. Gegebenenfalls wird der Vorläufer weiterer Belichtung und/oder Bestrahlung zur Vervollständigung der radikalischen Vernetzung ausgesetzt. Das radikalisch vernetzte Aufbaumaterial kann ein Speichermodul G' (DMA, Platte/Platte-Oszillationsviskosimeter gemäß ISO 6721-10 bei einer Temperatur von > 20 °C über der Glasübergangstemperatur /Schmelztemperatur und einer Scherrate von 1/s) von ≥ 10$^6$ Pa aufweisen.

Das radikalisch vernetzbare Aufbaumaterial kann weiterhin Additive wie Füllstoffe, UV-Stabilisatoren, Radikalinhibitoren, Antioxidantien, Formtrennmittel, Wasserfänger, Slipadditive, Entschäumer, Verlaufsmittel, Rheologieadditive, Flammschutzmittel und/oder Pigmente enthalten. Diese Hilfs- und Zusatzmittel, ausgenommen Füllstoffe und Flammschutzmittel, liegen üblicherweise in einer Menge von weniger als 10 Gew.-%, vorzugsweise weniger als 5 Gew.-%, besonders bevorzugt bis zu 3 Gew.-%, bezogen auf das radikalisch vernetzbare Harz vor. Flammschutzmittel liegen üblicherweise in Mengen von höchstens 70 Gew.-%, vorzugsweise höchstens 50 Gew.-%, besonders bevorzugt höchstens 30 Gew.-%, berechnet als Gesamtmenge an eingesetzten Flammschutzmitteln bezogen auf das Gesamtgewicht des radikalisch vernetzbaren Aufbaumaterials vor.

Geeignete Füllstoffe sind beispielsweise AlOH$_3$, CaCO$_3$, Metallpigmente wie TiO$_2$ und weitere bekannte übliche Füllstoffe. Diese Füllstoffe werden vorzugsweise in Mengen von höchstens 70 Gew.-%, bevorzugt höchstens 50 Gew.-%, besonders bevorzugt höchstens 30 Gew.-%, berechnet als Gesamtmenge an eingesetzten Füllstoffen bezogen auf das Gesamtgewicht des radikalisch vernetzbaren Harzes, eingesetzt.

Geeignete UV-Stabilisatoren können vorzugsweise ausgewählt werden aus der Gruppe, bestehend aus Piperidinderivaten, wie z.B. 4-Benzoyloxy-2,2,6,6-tetramethylpiperidin, 4-Benzoyloxy-1,2,2,6,6-pentamethylpiperidin, Bis-(2,2,6,6-tetra-methyl-4-piperidyl)-sebacat, Bis(1,2,2,6,6-pentamethyl-1-4-piperidinyl)-sebacat, Bis-(2,2,6,6-tetramethyl-4-piperidyl)-suberat, Bis-(2,2,6,6-tetramethyl-4-piperidyl)-dodecandioat; Benzophenonderivaten, wie z.B. 2,4-Dihydroxy-, 2-Hydroxy-4-methoxy-, 2-Hydroxy-4-octoxy-, 2-Hydroxy-4-dodecyloxy- oder 2,2'-Dihydroxy-4-dodecyloxy-benzophenon; Benztriazolderivaten, wie z.B. 2-(2H-Benzotriazol-2-yl)-4,6-di-tert-pentylphenol, 2-(2H-Benzotriazol-2-yl)-6-dodecyl-4-methylphenol, 2-(2H-Benzotriazol-2-yl)-4,6-bis(1-methyl-1-phenylethyl)phenol, 2-(5-Chlor-2H-benzotriazol-2-yl)-6-(1,1-dimethylethyl)-4-methylphenol, 2-(2H-benzotriazol-2-yl)-4-(1,1,3,3-tetramethylbutyl)phenol, 2-(2H-Benzotriazol-2-yl)-6-(1-methyl-1-phenylethyl)-4-(1,1,3,3-tetramethylbutyl)phenol, Isooctyl-3-(3-(2H-benzotriazol-2-yl)-5-(1,1-dimethylethyl)-4-hydroxyphenylpropionat), 2-(2H-Benzotriazol-2-yl)-4,6-bis(1,1-dimethylethyl)phenol, 2-(2H-Benzotriazol-2-yl)-4,6-bis(1-methyl-1-plienyletlryl)phenol, 2-(5-Chlor-2H-benzotriazol-2-yl)-4,6-bis(1,1-dimethylethyl)phenol; Oxaniliden, wie z.B. 2-Ethyl-2'-ethoxy- oder 4-Methyl-4'-methoxyoxalanil; Salicylsäureestern, wie z.B. Salicylsäurephenylester, Salicylsäure-4-tert-butylphenylester, Salicylsäure-4-tertoctylphenylester; Zimtsäureesterderivaten, wie z.B. a-Cyano-β-methyl-4-methoxyzimtsäuremethylester, α-Cyano-β-methyl-4-methoxyzimtsäurebutyl-ester, α-Cyano-β-phenylzimtsäureethylester, α-Cyano-β-phenylzimtsäureisooctylester; und Malonesterderivaten, wie z.B. 4-Methoxybenzylidenmalonsäuredimethylester, 4-Methoxybenzylidenmalonsäurediethylester, 4-Butoxybenzylidenmalonsäuredimethylester. Diese bevorzugten Lichtstabilisatoren können sowohl einzeln als auch in beliebigen Kombinationen untereinander zum Einsatz kommen.

Besonders bevorzugte UV-Stabilisatoren sind solche, die Strahlung einer Wellenlänge < 400 nm vollständig absorbieren. Hierzu zählen beispielsweise die genannten Benztriazolderivate. Ganz besonders bevorzugte UV-Stabilisatoren sind 2-(5-Chlor-2H-benzotriazol-2-yl)-6-(1,1-dimethylethyl)-4-methylphenol, 2-(2H-benzotriazol-2-yl)-4-(1,1,3,3-tetramethylbutyl)phenol und/oder 2-(5-Chlor-2H-benzotriazol-2-yl)-4,6-bis(1,1-dimethylethyl)phenol.

Gegebenenfalls werden ein oder mehrere der beispielhaft genannten UV-Stabilisatoren dem radikalisch vernetzbaren Aufbaumaterial vorzugsweise in Mengen von 0,001 bis 3,0 Gew.-%, besonders bevorzugt 0,005 bis 2 Gew.-%, berechnet als Gesamtmenge an eingesetzten UV-Stabilisatoren bezogen auf das Gesamtgewicht des radikalisch vernetzbaren Aufbaumaterials, zugesetzt.

Geeignete Antioxidantien sind vorzugsweise sterisch gehinderten Phenole, welche vorzugsweise ausgewählt werden können aus der Gruppe, bestehend aus 2,6-Di-tert-butyl-4-methylphenol (Ionol), Pentaerythrit-tetrakis(3-(3,5-di-tert-butyl-4-hydroxy-phenyl)-propionat), Octadecyl-3-(3,5-di-tert-butyl-4-hydroxyphenyl)-propionat, Triethylen-glykol-bis(3-tert-butyl-4-hydroxy-5-methylphenyl)propionat, 2,2'-Thio-bis(4-methyl-6-tert-butylphenol) und 2,2'-Thiodiethyl-bis[3-(3,5-di-tert-butyl-4-hydroxyphenyl)propionat]. Diese können bei Bedarf sowohl einzeln als auch in beliebigen Kombinationen untereinander eingesetzt werden. Diese Antioxidantien werden vorzugsweise in Mengen von 0,01 bis 3,0 Gew.-%, besonders bevorzugt 0,02 bis 2,0 Gew.-%, berechnet als Gesamtmenge an eingesetzten Antioxidantien bezogen auf das Gesamtgewicht des radikalisch vernetzbaren Aufbaumaterials, eingesetzt.

Geeignete Radikalinhibitoren bzw. Verzögerer sind besonders solche, die eine unkontrollierte radikalische Polymerisation der Harzformulierung außerhalb des gewünschten (bestrahlten) Bereiches gezielt inhibieren. Diese sind für eine gute Randschärfe und Abbildungsgenauigkeit im Vorläufer entscheidend. Geeignete Radikalinhibitoren müssen entsprechend der gewünschten Radikalausbeute aus dem Bestrahlungs-/Belichtungsschritt und der Polymerisationsgeschwindigkeit und Reaktivität/Selektivität der Doppelbindungsträger ausgesucht werden. Geeignete Radikalinhibitoren sind z. B. 2,2-(2,5-thiophendiyl)bis(5-tertbutylbenzoxazol), Phenothiazin, Hydrochinone, Hydrochinonether, Quinonalkyde und Nitroxylverbindungen sowie Mischungen davon, Benzoquinone, Kupfer Salze, Brenzcatechine, Cresole, Nitrobenzol und Sauerstoff. Diese Antioxidantien werden vorzugsweise in Mengen von 0,001 Gew% bis 3 Gew.% eingesetzt.

In der vorliegenden Erfindung liegen in dem radikalisch vernetzbaren Aufbaumaterial die olefinischen Doppelbindungen zumindest teilweise in Form von (Meth)Acrylatgruppen vor.

Das radikalisch vernetzbare Aufbaumaterial umfasst eine Verbindung, die aus der Reaktion eines NCO-terminierten Polyisocyanurats mit einem, bezogen auf die freien NCO-Gruppen, molaren Überschuss eines Hydroxyalkyl(meth)acrylats erhältlich ist.

Geeignete Polyisocyanate zur Herstellung der NCO-terminierten Polyisocyanurate und Prepolymere sind beispielsweise solche, die ein Molekulargewicht im Bereich von 140 bis 400 g/mol aufweisen, mit aliphatisch, cycloaliphatisch, araliphatisch und/oder aromatisch gebundenen Isocyanatgruppen, wie z. B. 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan (Isophorondiisocyanat; IPDI), 1-Isocyanato-1-methyl-4(3)-isocyanatomethylcyclohexan, 2,4'- und 4,4'-Diisocyanatodicyclohexylmethan (H$_{12}$MDI), 1,3- und 1,4-Bis(isocyanatomethyl)cyclohexan, Bis-(isocyanatomethyl)-norbornan (NBDI), 4,4'-Diisocyanato-3,3'-dimethyldicyclohexylmethan, 4,4'-Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanato-adamantan, 1,3-Dimethyl-5,7-diisocyanatoadamantan, 1,3- und 1,4-Bis-(isocyanatomethyl)benzol (Xyxlylendiisocyanat; XDI), 1,3- und 1,4-Bis(1-isocyanato-l-methylethyl)-benzol (TMXDI) und Bis(4-(1-isocyanato-1-methylethyl)phenyl)-carbonat, 2,4- und 2,6-Diisocyanatotoluol (TDI), 2,4'- und 4,4'-Diisocyanatodiphenylmethan (MDI), 1,5-Diisocyanatonaphthalin sowie beliebige Gemische solcher Diisocyanate.

Geeignete Hydroxyalkyl(meth)acrylate sind unter anderem Alkoxyalkyl(meth)acrylate mit 2 bis 12 Kohlenstoffatomen im Hydroxyalkylrest. Bevorzugt sind 2-Hydroxyethylacrylat, das bei der Anlagerung von Propylenoxid an Acrylsäure entstehende Isomerengemisch oder 4-Hydroxybutylacrylat.

Bevorzugt werden Methacrylate eingesetzt.

Die Reaktion zwischen dem Hydroxyalkyl(meth)acrylat und dem NCO-terminierten Polyisocyanurat kann durch die üblichen Urethanisierungskatalysatoren wie DBTL katalysiert werden. Die erhaltene härtbare Verbindung kann ein zahlenmittleres Molekulargewicht $M_n$ von ≥ 200 g/mol bis ≤ 5000 g/mol aufweisen. Vorzugsweise beträgt dieses Molekulargewicht ≥ 300 g/mol bis ≤ 4000 g/mol, mehr bevorzugt ≥ 400 g/mol bis ≤ 3000 g/mol.

Besonders bevorzugt ist eine härtbare Verbindung, die aus der Reaktion eines NCO-terminierten Polyisocyanurats mit Hydroxethyl(meth)acrylat erhalten wurde, wobei das NCO-terminierte Polyisocyanurat aus 1,6-Hexamethylendiisocyanat in Gegenwart eines Isocyanat-Trimerisierungskatalysators erhalten wurde. Diese härtbare Verbindung hat ein zahlenmittleres Molekulargewicht $M_n$ von ≥ 400 g/mol bis ≤ 3000 g/mol. In einer weiteren bevorzugten Ausführungsform umfasst das radikalisch vernetzbare Harz weiterhin einen Radikalstarter Um eine unerwünschte Erhöhung der Viskosität des radikalisch vernetzbaren Harzes zu verhindern, können Radikalstarter erst unmittelbar vor Beginn des erfindungsgemäßen Verfahrens dem Harz hinzugefügt werden.

Als Radikalstarter kommen thermische und/oder photochemische Radikalstarter (Photoinitiatoren) in Betracht. Es ist auch möglich, dass gleichzeitig thermische und photochemische Radikalstarter eingesetzt werden. Geeignete thermische Radikalstarter sind beispielsweise Azobisisobutyronitril (AIBN), Dibenzoylperoxid (DBPO), Di-tert-butylperoxid und/oder anorganische Peroxide wie Peroxodisulfate.

Bei den Photoinitiatoren wird prinzipiell zwischen zwei Typen unterschieden, dem unimolekularen Typ (I) und dem bimolekularen Typ (II). Geeignete Typ (I)-Systeme sind aromatische Ketonverbindungen, wie z. B. Benzophenone in Kombination mit tertiären Aminen, Alkylbenzophenone, 4,4'-Bis(dimethylamino)benzophenon (Michlers Keton), Anthron und halogenierte Benzophenone oder Mischungen der genannten Typen. Weiter geeignet sind Typ (II)-Initiatoren wie Benzoin und seine Derivate, Benzilketale, Acylphosphinoxide, 2,4,6-Trimethylbenzoyldiphenylphosphinoxid, Bisacylphosphinoxide, Phenylglyoxylsäureester, Campherchinon, α-Aminoalkylphenone, α,α-Dialkoxyacetophenone und α-Hydroxyalkylphenone. Spezielle Beispiele sind Irgacur®500 (eine Mischung von Benzophenon und (1-Hydroxycyclohexyl)phenylketon, Fa. Ciba, Lampertheim, DE), Irgacure®819 DW (Phenylbis-(2, 4, 6-trimethylbenzoyl)phosphinoxid, Fa. Ciba, Lampertheim, DE) oder Esacure® KIP EM (Oligo-[2-hydroxy-2-methyl-1-[4-(1-methylvinyl)-phenyl]-propanone], Fa. Lamberti, Aldizzate, Italien) und Bis-(4-methoxybenzoyl)diethylgerman. Es können auch Gemische dieser Verbindungen eingesetzt werden.

Bei den Photoinitiatoren sollte darauf geachtet werden, dass sie eine ausreichende Reaktivität gegenüber der verwendeten Strahlquelle haben. Es sind eine Vielzahl von Photoinitiatoren auf dem Markt bekannt. Durch kommerziell verfügbare Photoinitiatoren wird der Wellenlängenbereich im gesamten UV-VIS Spektrum abgedeckt. Photoinitiatoren finden Einsatz bei der Herstellung von Lacken, Druckfarben und Klebstoffen sowie im Dentalbereich.

In dieser Verfahrensvariante kommt der Photoinitiator im Allgemeinen in einer auf die Menge der eingesetzten härtbaren olefinisch ungesättigte Doppelbindungen tragenden Komponente bezogenen Konzentration von 0,01 bis 6,0 Gew.-%, bevorzugt von 0,05 bis 4,0 Gew.-% und besonders bevorzugt von 0,1 bis 3,0 Gew.-% zum Einsatz.

In einer weiteren bevorzugten Ausführungsform weist das Verfahren die Merkmale auf:

- der Träger ist innerhalb eines Behälters angeordnet und ist vertikal in Schwerkraftrichtung absenkbar,

- der Behälter enthält das radikalisch vernetzbare Aufbaumaterial in einer Menge, welche ausreicht, um wenigstens den Träger und eine in vertikaler Richtung gesehenen obersten Oberfläche von auf dem Träger abgeschiedenem vernetztem Aufbaumaterial zu bedecken,

- vor jedem Schritt II) wird der Träger um eine vorbestimmte Strecke abgesenkt, so dass über der in vertikaler Richtung gesehen obersten Lage des vernetzten Aufbaumaterials sich eine Schicht des radikalisch vernetzbaren Aufbaumaterials bildet und

- in Schritt II) belichtet und/oder bestrahlt ein Energiestrahl den ausgewählten Bereich der Schicht des radikalisch vernetzbaren Aufbaumaterials, entsprechend dem jeweils ausgewählten Querschnitt des Vorläufers.

Somit wird gemäß dieser Ausführungsform das additive Fertigungsverfahren der Stereolithographie (SLA) abgedeckt. Der Träger kann beispielsweise jeweils um eine vorbestimmte Strecke von $\geq 1\ \mu$m bis $\leq 2000\ \mu$m abgesenkt werden.

In einer weiteren bevorzugten Ausführungsform weist das Verfahren die Merkmale auf:

- der Träger ist innerhalb eines Behälters angeordnet ist und vertikal entgegen der Schwerkraftrichtung anhebbar,

- der Behälter stellt das radikalisch vernetzbare Aufbaumaterial bereit,

- vor jedem Schritt II) wird der Träger um eine vorbestimmte Strecke angehoben, so dass unter der in vertikaler Richtung gesehen untersten Lage des vernetzten Aufbaumaterials sich eine Schicht des radikalisch vernetzbaren Aufbaumaterials bildet und

- in Schritt II) belichtet und/oder bestrahlt eine Mehrzahl von Energiestrahlen den ausgewählten Bereich der Schicht des radikalisch vernetzbaren Aufbaumaterials, entsprechend dem jeweils ausgewählten Querschnitt des Vorläufers, gleichzeitig.

Somit wird gemäß dieser Ausführungsform das additive Fertigungsverfahren der DLP-Technologie abgedeckt, wenn die Mehrzahl von Energiestrahlen über ein Array von einzeln ansteuerbaren Mikrospiegeln das per Belichtung und/oder Bestrahlung bereitzustellende Bild erzeugen. Der Träger kann beispielsweise jeweils um eine vorbestimmte Strecke von $\geq 1\ \mu$m bis $\leq 2000\ \mu$m angehoben werden.

In einer weiteren bevorzugten Ausführungsform weist das Verfahren die Merkmale auf:

- in Schritt II) wird das radikalisch vernetzbare Aufbaumaterial aus einem oder mehreren Druckköpfen, entsprechend dem jeweils ausgewählten Querschnitt des Vorläufers, aufgetragen und wird anschließend belichtet und/oder bestrahlt.

Somit wird gemäß dieser Ausführungsform das additive Fertigungsverfahren der Inkjet-Methode abgedeckt: es wird das vernetzbare Aufbaumaterial gegebenenfalls separat von den erfindungsgemäßen Katalysatoren selektiv durch einen oder mehrere Druckköpfe aufgetragen und die anschließende Härtung durch Bestrahlen und/oder Belichtung kann unselektiv sein, beispielsweise durch eine UV-Lampe. Bei dem oder den Druckköpfen zum Auftragen des vernetzbaren Aufbaumaterials kann es sich um einen (modifizierten) Druckkopf für Tintenstrahldruckverfahren handeln. Der Träger kann vom Druckkopf weg bewegbar ausgestaltet sein oder der Druckkopf kann vom Träger weg bewegbar ausgestaltet sein. Die Inkremente der Abstandsbewegungen zwischen Träger und Druckkopf können beispielsweise in einem Bereich von $\geq 1\ \mu m$ bis $\leq 2000\ \mu m$ liegen.

In einer weiteren bevorzugten Ausführungsform umfasst die Herstellung des Gegenstands mittels des additiven Fertigungsverfahrens die Schritte:

- Auftragen einer Schicht aus das Aufbaumaterial aufweisenden Partikeln auf eine Zielfläche;

- Einwirken von Energie auf einen ausgewählten Teil der Schicht, entsprechend einem Querschnitt des Gegenstands, so dass die Partikel im ausgewählten Teil verbunden werden;

- Wiederholen der Schritte des Auftragens und des Einwirkens von Energie für eine Mehrzahl von Schichten, so dass die verbundenen Teile der benachbarten Schichten sich verbinden, um den Gegenstand zu bilden.

Gemäß dieser Ausführungsform handelt es sich um ein Pulversinter- oder Pulverschmelzverfahren. Es ist bevorzugt, dass mindestens 90 Gewichts-% der Partikel einen Teilchendurchmesser von $\leq 0.25$ mm, bevorzugt $\leq 0.2$ mm, besonders bevorzugt $\leq 0.15$ mm aufweisen. Die Energiequelle zum Verbinden der Teilchen kann elektromagnetische Energie wie zum Beispiel UV- bis IR-Licht sein. Denkbar ist auch ein Elektronenstrahl. Das Verbinden der Partikel im bestrahlten Teil der Partikelschicht erfolgt üblicherweise durch (teilweises) Aufschmelzen eines (teil)kristallinen Materials und Verbinden des Materials beim Abkühlen. Es ist aber auch möglich, dass andere Gestaltumwandlungen der Partikel wie ein Glasübergang, das heißt das Erwärmen des Materials auf eine Temperatur oberhalb der Glasübergangstemperatur, eine Verbindung der Partikel der Partikel untereinander bewirken.

In einer weiteren bevorzugten Ausführungsform umfasst das Einwirken von Energie auf einen ausgewählten Teil der Schicht, entsprechend einem Querschnitt des Gegenstandes, so dass die Partikel im ausgewählten Teil verbunden werden, den folgenden Schritt:

- Bestrahlen eines ausgewählten Teils der Schicht, entsprechend einem Querschnitt des Gegenstandes, mit einem Energiestrahl, so dass die Partikel im ausgewählten Teil verbunden werden.

Diese Verfahrensform kann als selektives Sinterverfahren, insbesondere als selektives Lasersinterverfahren (SLS) angesehen werden. Der Energiestrahl zum Verbinden der Teilchen kann ein Strahl elektromagnetischer Energie wie zum Beispiel ein "Lichtstrahl" von UV- bis IR-Licht sein. Vorzugsweise ist der Energiestrahl ein Laserstrahl, besonders bevorzugt mit einer Wellenlänge zwischen 600 nm und 15 $\mu m$. Der Laser kann als Halbleiterlaser oder als Gaslaser ausgeführt sein. Denkbar ist auch ein Elektronenstrahl.

In einer weiteren bevorzugten Ausführungsform umfasst das Einwirken von Energie auf einen ausgewählten Teil der Schicht, entsprechend einem Querschnitt des Gegenstandes, so dass die Partikel im ausgewählten Teil verbunden werden, die folgenden Schritte:

- Auftragen einer Flüssigkeit auf einen ausgewählten Teil der Schicht, entsprechend einem Querschnitt des Gegenstandes, wobei die Flüssigkeit die Absorption von Energie in den von ihr kontaktierten Bereichen der Schicht relativ zu den nicht von ihr kontaktierten Bereichen erhöht;

- Bestrahlen der Schicht, so dass die Partikel in von der Flüssigkeit kontaktierten Bereichen der Schicht miteinander verbunden werden und die Partikel in nicht von der Flüssigkeit kontaktierten Bereichen der Schicht nicht miteinander verbunden werden.

Bei dieser Ausführungsform kann beispielsweise eine Flüssigkeit enthaltend einen IR-Absorber mittels Inkjet-Verfahren auf die Schicht aufgetragen werden. Das Bestrahlen der Schicht führt zu einer selektiven Erwärmung derjenigen Partikel, welche in Kontakt mit der Flüssigkeit samt IR-Absorber stehen. Auf diese Weise kann ein Verbinden der Partikel erreicht werden. Optional kann zusätzlich eine zweite Flüssigkeit eingesetzt werden, die hinsichtlich des Verhaltens gegenüber der verwendeten Energie komplementär zur Energie absorbierenden Flüssigkeit ist. In Bereichen, in denen die zweite Flüssigkeit aufgetragen wird, wird die eingesetzte Energie nicht absorbiert, sondern reflektiert. Die unter der zweiten Flüssigkeit liegenden Bereiche werden somit abgeschattet. Auf diese Weise kann die Trennschärfe gegenüber aufzuschmelzenden und nicht aufzuschmelzenden Bereichen der Schicht erhöht werden.

In einer weiteren bevorzugten Ausführungsform umfasst die Herstellung des Gegenstands mittels des additiven Fertigungsverfahrens die Schritte:

- Auftragen eines Filaments eines zumindest teilweise geschmolzenen Aufbaumaterials auf einen Träger, so dass eine Lage des Aufbaumaterials erhalten wird, welche einem ersten ausgewählten Querschnitt des Gegenstands entspricht;

- Auftragen eines Filaments des zumindest teilweise geschmolzenen Aufbaumaterials auf eine zuvor aufgetragene Lage des Aufbaumaterials, so dass eine weitere Lage des Aufbaumaterials erhalten wird, welche einem weiteren ausgewählten Querschnitt des Gegenstands entspricht und welche mit der zuvor aufgetragenen Lage verbunden ist;

- Wiederholen des Schritts des Auftragens eines Filaments des zumindest teilweise geschmolzenen Aufbaumaterials auf eine zuvor aufgetragene Lage des Aufbaumaterials, bis der Gegenstand gebildet ist.

Bei dieser Ausführungsform handelt es sich um ein Schmelzschichtungs- oder Fused Deposition Modeling (FDM)-Verfahren. Ist die Anzahl der Wiederholungen für das Auftragen hinreichend gering, kann auch von einem zweidimensionalen Gegenstand gesprochen werden, der aufgebaut werden soll. Solch ein zweidimensionaler Gegenstand lässt sich auch als Beschichtung charakterisieren. Beispielsweise können zu dessen Aufbau $\geq 1$ bis $\leq 20$ Wiederholungen für das Auftragen durchgeführt werden.

Die einzelnen Filamente, welche aufgetragen werden, können einen Durchmesser von $\geq 30\ \mu m$ bis $\leq 2000\ \mu m$ aufweisen, bevorzugt $\geq 40\ \mu m$ bis $\leq 1000\ \mu m$ und besonders bevorzugt $\geq 50\ \mu m$ bis $\leq 500\ \mu m$.

Der erste Schritt dieser Ausführungsform des Verfahrens betrifft den Aufbau der ersten Lage auf einen Träger. Anschließend wird der zweite Schritt so lange ausgeführt, in dem auf zuvor aufgetragene lagen des Aufbaumaterials weiter Lagen aufgetragen werden, bis das gewünschte Endergebnis in Form des Gegenstands erhalten wird. Das zumindest teilweise aufgeschmolzene Aufbaumaterial verbindet sich mit bereits bestehenden Lagen des Materials, um eine Struktur in z-Richtung aufzubauen. Es ist aber möglich, dass nur eine Lage des Aufbaumaterials auf einen Träger aufgetragen wird.

In einer weiteren bevorzugten Ausführungsform weist die Polyaminkomponente eine durchschnittliche Anzahl von Zerewitinoff-aktiven H-Atomen von $\geq 4$ auf.

In einer weiteren bevorzugten Ausführungsform enthält die Polyaminkomponente eine oder mehrere Verbindungen aus der Gruppe: Adipinsäuredihydrazid, Ethylendiamin, Diethylentriamin, Triethylentetramin, Tetraetylenpentamin, Pentaethylenhexamin, Dipropylentriamin, Hexamethylendiamin, Hydrazin, Isophorondiamin, (4,4'- und/oder 2,4'-)Diaminodicyclohexylmethan, (4,4'- und/oder 2,4'-)Diamino-3,3'-dimethyldicyclohexylmethan und N-(2-Aminoethyl-)2-aminoethanol.

In einer weiteren bevorzugten Ausführungsform liegt die Polyaminkomponente in einem Anteil von $\geq 0.1$ Gewichts-% bis $\leq 25$ Gewichts-%, bezogen auf das Gewicht des Aufbaumaterials, vor.

In einer weiteren bevorzugten Ausführungsform weist das Polyurethanpolymer im Aufbaumaterial ein durchschnittliches Molekulargewicht der linearen Wiederholungseinheiten $M_u$ von $\geq 100$ g/mol bis $\leq 2000$ g/mol (bevorzugt $\geq 140$ g/mol bis $\leq 800$ g/mol, mehr bevorzugt $\geq 160$ g/mol bis $\leq 600$ g/mol und besonders bevorzugt $\geq 180$ g/mol bis $\leq 500$ g/mol) auf, wobei $M_u$ wie folgt berechnet wird:

$$M_u = ((M_i/R_i) + (M_p/R_p))*200$$

mit:

$M_i$ Molekulargewicht einer NCO-Gruppe (42 g/mol)

$M_p$ Molekulargewicht einer OH-Gruppe (17 g/mol)

$R_i$ Zahlenwert der Angabe des durchschnittlichen NCO-Gruppengehalts in Gewichts-% nach ISO 11909 der zur Herstellung des Polyurethanpolymers im Aufbaumaterial eingesetzten Polyisocyanate

$R_p$ Zahlenwert der Angabe des durchschnittlichen OH-Gruppengehalts in Gewichts-% nach DIN 53240 der zur Herstellung des Polyurethanpolymers im Aufbaumaterial eingesetzten Polyole

Die Angaben "Zahlenwert der Angabe des durchschnittlichen NCO-Gruppengehalts in Gewichts-%" und "Zahlenwert der Angabe des durchschnittlichen OH-Gruppengehalts in Gewichts-%" seien an den folgenden Beispielen verdeutlicht: eine Polyisocyanatkomponente weist einen durchschnittlichen Gehalt an NCO-Gruppen von 20 Gewichts-

% auf. Dann hätte $R_i$ in der obigen Formel den Wert 20. Ebenso hätte, wenn eine Polyolkomponente einen durchschnittlichen Gehalt an OH-Gruppen von 15 Gewichts-% hat, $R_p$ in der obigen Formel den Wert 15.

In einer weiteren bevorzugten Ausführungsform weist das Polyesterpolymer im Aufbaumaterial ein durchschnittliches Molekulargewicht der linearen Wiederholungseinheiten $M_u$ von $\geq$ 100 g/mol bis $\leq$ 1000 g/mol (bevorzugt $\geq$ 120 g/mol bis $\leq$ 700 g/mol, mehr bevorzugt $\geq$ 150 g/mol bis $\leq$ 500 g/mol und besonders bevorzugt $\geq$ 160 g/mol bis $\leq$ 400 g/mol) auf, wobei $M_u$ wie folgt berechnet wird:

$$M_u = ((M_i/R_i) + (M_p/R_p))*200$$

mit:

$M_i$      Molekulargewicht einer Säure-Gruppe (berechnet als 28 g/mol wegen Wasserabspaltung)

$M_p$      Molekulargewicht einer OH-Gruppe (berechnet als 16 g/mol wegen Wasserabspaltung)

$R_i$      Zahlenwert der Angabe des durchschnittlichen Säure-Gruppengehalts in Gewichts-%, errechenbar aus der Titration des durchschnittlichen Säure-Gruppengehalt in Wasser gegen KOH der zur Herstellung des Polyesterpolymers im Aufbaumaterial eingesetzten Polycarbonsäuren oder deren Äquivalente

$R_p$      Zahlenwert der Angabe des durchschnittlichen OH-Gruppengehalts in Gewichts-% nach DIN 53240 der zur Herstellung des Polyesterpolymers im Aufbaumaterial eingesetzten Polyole

Die Angaben "Zahlenwert der Angabe des durchschnittlichen Acyl-Gruppengehalts in Gewichts-%, und "Zahlenwert der Angabe des durchschnittlichen OH-Gruppengehalts in Gewichts-%" seien an den folgenden Beispielen verdeutlicht: eine Polycarbonsäure weist einen durchschnittlichen Gehalt an Acyl-Gruppen von 10 Gewichts-% auf. Dann hätte $R_i$ in der obigen Formel den Wert 10. Ebenso hätte, wenn eine Polyolkomponente einen durchschnittlichen Gehalt an OH-Gruppen von 10 Gewichts-% hat, $R_p$ in der obigen Formel den Wert 10.

Die Erfindung betrifft weiterhin einen Gegenstand, der durch ein erfindungsgemäßes Verfahren erhältlich ist und vorzugsweise erhalten wurde.

In einer bevorzugten Ausführungsform des Gegenstands weist das während und/oder nach der Herstellung des Gegenstands auf eine Temperatur von $\geq$ 50 °C erwärmte Aufbaumaterial einen Harnstoffgruppengehalt von $\geq$ 0,1 Gewichts-% bis $\leq$ 15 Gewichts-% (bevorzugt $\geq$ 0,3 Gewichts-% bis $\leq$ 10 Gewichts-% und mehr bevorzugt $\geq$ 0,3 Gewichts-% und $\leq$ 8 Gewichts-%) und/oder einen Amidgruppengehalt von $\geq$ 0,1 Gewichts-% bis $\leq$ 10 Gewichts-% (bevorzugt $\geq$ 0,2 Gewichts-% bis $\leq$ 8 Gewichts-% und mehr bevorzugt $\geq$ 0,3 Gewichts-% und $\leq$ 5 Gewichts-%) auf.

Der Harnstoff- und/oder Amidgruppengehalt kann über IR-Spektroskopie und /oder durch Titration des nicht umgesetzten Amins ermittelt werden.

In einer weiteren bevorzugten Ausführungsform des Gegenstands weist das während und/oder nach der Herstellung des Gegenstands auf eine Temperatur von $\geq$ 50 °C erwärmte Aufbaumaterial einen Schmelzpunkt (DSC) von $\geq$ 60 °C (bevorzugt $\geq$ 80 °C und mehr bevorzugt $\geq$ 100 °C) auf.

In einer weiteren bevorzugten Ausführungsform des Gegenstands weist das während und/oder nach der Herstellung des Gegenstands auf eine Temperatur von $\geq$ 50 °C erwärmte Aufbaumaterial einen anderen Schmelzpunkt als das vor Beginn des erfindungsgemäßen Verfahrens vorliegende Aufbaumaterial auf. Vorzugsweise ist der Schmelzpunkt, bestimmt durch DSC, größer als bei dem Ausgangs-Aufbaumaterial.

In einer weiteren bevorzugten Ausführungsform des Gegenstands weist das während und/oder nach der Herstellung des Gegenstands auf eine Temperatur von $\geq$ 50 °C erwärmte Aufbaumaterial einen anderen E-Modul (ISO 527) als das vor Beginn des erfindungsgemäßen Verfahrens vorliegende Aufbaumaterial auf. Vorzugsweise erhöht sich der E-Modul im während und/oder nach der Herstellung des Gegenstands auf eine Temperatur von $\geq$ 50 °C erwärmten Aufbaumaterial.

Die nachfolgenden Ausführungsbeispiele dienen nur dazu, die Erfindung zu illustrieren. Sie sollen den Schutzumfang der Patentansprüche oder der Beschreibung in keiner Weise beschränken.

**Allgemeine Angaben:**

Alle Prozentangaben beziehen sich, sofern nicht abweichend angegeben, auf Gewichtsprozent (Gew.-%).

Die zur Zeit der Versuchsdurchführung herrschende Umgebungstemperatur von 23 °C wird als RT (Raumtemperatur) bezeichnet.

Die nachstehend aufgeführten Methoden zur Bestimmung der entsprechenden Parameter wurden zur Durchführung bzw. Auswertung der Beispiele angewendet und sind auch die Methoden zur Bestimmung der erfindungsgemäß relevanten Parameter im Allgemeinen.

**Bestimmung der Phasenübergänge mittels DSC**

Die Phasenübergänge wurden mittels DSC (Differential Scanning Calorimetry) mit einem Mettler DSC 12E (Mettler Toledo GmbH, Gießen, DE) entsprechend DIN EN 61006 bestimmt. Eine Kalibrierung erfolgte durch die Temperatur des Schmelz-Onsets von Indium und Blei. Es wurden 10 mg Substanz in Normalkapseln eingewogen. Die Messung erfolgte durch drei Aufheizungen von -50 °C bis +200 °C bei einer Heizrate von 20 K/min mit anschließender Abkühlung mit einer Kühlrate von 320 K/min. Die Kühlung erfolgte durch flüssigen Stickstoff. Als Spülgas wurde Stickstoff verwendet. Die angegebenen Werte basieren jeweils auf der Auswertung der 1. Aufheizkurve, da bei den untersuchten Reaktivsystemen durch die Temperaturbelastung in der DSC Veränderungen der Probe im Messprozess bei hohen Temperaturen möglich sind. Die Schmelztemperaturen $T_m$ wurden aus den Temperaturen an den Maxima der Wärmeflusskurven erhalten. Die Glasübergangstemperatur $T_g$ wurde aus der Temperatur bei der halben Höhe einer Glasübergangsstufe erhalten.

**Bestimmung von Infrarotspektren**

Die Infrarotspektren wurden an einem mit einer ATR-Einheit ausgerüsteten FT-IR-Spektrometer der Firma Bruker gemessen.

**Ausgangsverbindungen**

Polyisocyanat: HDI-Trimerisat (NCO-Funktionalität >3) mit einem NCO-Gehalt von 23,0 Gew.-% von der Fa. Covestro AG. Die Viskosität beträgt ca. 1200 mPa·s bei 23°C (DIN EN ISO 3219/A.3).

| | |
|---|---|
| Hydroxyethylmethacrylat (HEMA) | von Sigma Aldrich |
| Isobornyl methacrylate (IBOMA) | von Sigma Aldrich |
| 1,6-Hexanediol dimethacrylate (HDDMA) | von Sigma Aldrich |
| Isophorondiamine (IPDA) | von Evonik Industries |
| 1,6-Hexanediol diacrylate (HDA) | von Arcos Organics |
| Jeffamine T 403 | von Sigma Aldrich |
| Omnirad 1173 | von IGM Resins |

**Formulierung der Aufbaumaterialien:**

In einem Kunststoffbecher mit Deckel wurden die Komponenten in der Reihenfolge Polyisocyanat, HEMA bei 60°C gemischt, bis kein "freies" Isocyanat mehr detektiert werden konnte. Für die Messung der freien NCO-Gruppen wurde ein FT- IR-Spektrometer (Tensor II) der Fa. Bruker eingesetzt. Zur Messung der freien NCO-Gruppen wurde der Probenfilm mit der Platinum- ATR-Einheit kontaktiert. Die kontaktierte Fläche der Probe war 2 x 2 mm. Bei der Messung drang die IR-Strahlung je nach Wellenzahl 3 bis 4 $\mu$m in die Probe ein. Von der Probe wurde anschließend ein Absorptionsspektrum erstellt. Um eine ungleichmäßige Kontaktierung der unterschiedlich harten Proben zu kompensieren, wurde an allen Spektren eine Grundlinienkorrektur durchgeführt und eine Normierung im Wellenzahlbereich 2600-3200 (CH2, CH3) vollzogen. Die Interpolation der "freien" NCO-Gruppe wurde im Wellenzahlbereich 2170-2380 durchgeführt. Für das bei den Experimenten eingesetzte Umsetzungsprodukt von Polyisocyanat mit HEMA ergab sich so ein Zahlenwert von 0.

Die radikalisch härtbaren Aufbaumaterialien gemäß den Beispielen 1 bis 8 wurden in einem Kunststoffbecher mit Deckel mit einem Planetenkreiselmischer Thinky ARE250 bei Raumtemperatur für ca. 2 Minuten bei einer Umdrehungszahl von 2000 Umdrehungen pro Minute vermischt. In den Formulierungen 2, 3, 4 lag eine Urethangruppenkonzentration von > 8% vor. Die Amidkonzentration und Hamstoffkonzentration vor Umsetzung mit den bifunktionellen Aminen betrug < 0,1%. Die Vergleichsprobe 1 wurde ohne Amin formuliert. Die Vergleichsproben 5 bis 8 wiesen eine Urethangruppenkonzentration von < 5% auf und wurden nach Lagerung über 24h bei RT geprüft, also ohne Erwärmung > 50°C.

Die radikalisch härtbaren Aufbaumaterialien gemäß den Beispielen 1 bis 8 wurden mit einer Rakel mit einem Spalt von 400 $\mu$m auf eine Glasplatte appliziert.

Die beschichteten Glassubstrate wurden anschließend in einer UV-Härtungsanlage der Firma Superfici mit Quecksilber- und Gallium-Strahlungsquellen mit einer Bandgeschwindigkeit von 5 m/min gehärtet. Aus Lampenleistung und Bandgeschwindigkeit resultierte eine Strahlungsintensität von 1.300 mJ/cm$^2$, die auf die beschichteten Substrate einwirkte.

Anschließend wurden die UV-gehärteten Filme auf den Glassubstraten in einen Trockenofen bei 100 °C unter Luftatmosphäre 2 Stunden gelagert.

Es wurden Härtemessungen nach Martens nachgemäß DIN EN ISO 14577 mit einem Mikrohärtemessgerät Fischerscope H100C der Fa. Fischer durchgeführt. Dabei drang ein pyramidenförmiger Diamant in die Filmoberfläche ein und der Härtewert wurde bestimmt.

Bezugsbeispiele sind mit einem * gekennzeichnet.

Jeffamine T 403    von Sigma Aldrich

Omnirad 1173    von IGM Resins

Beispiele :

| Beispiel | 1 | 2* | 3* | 4* |
|---|---|---|---|---|
| **Einsatzstoffe** | **Gewicht [g]** | | | |
| Polyisocyanat | 33,8 | 33,8 | 33,8 | 33,8 |
| HEMA | 26,2 | 26,2 | 26,2 | 26,2 |
| IBOMA | 40 | 40 | 40 | 40 |
| | | | | |
| IPDA | - | 2,98 | | |
| HDA | - | | 2,03 | |
| Jeffamine 403 | - | | | 5,14 |
| Omnirad 1173 | 3 | 3 | 3 | 3 |
| UV Härtung + Ofen Härtung | | | | |
| Bewertung Film | fester Film | fester Film | fester Film | fester Film |
| HM (Martenshärte (N/mm$^2$)) | 172 | 146 | 168 | 142 |
| nIT (elastischer Verformungsanteil%) | 59 | 67 | 66 | 62,9 |
| Tg erste Aufheizung [°C] | 55/127 | 54/116 | 54/118 | 77/119 |
| IR, NH$_2$ (wagging) Signal bei 810 cm$^{-1}$ | - | - | - | - |

Der Vergleichsversuch 1 wurde ohne Einsatz eines Amins durchgeführt und zeigte mit 172 N/mm$^2$ die größte Härte. Der Einsatz eines Aminvernetzers in den Versuchen 2 bis 4 zeigte einen verminderten Härtewert und eine Elastifizierung. Dies ist chemisch aufgrund eines Einbaus der Amine in das Polymer zu erklären. Entsprechend der Funktionalität und Äquivalentgewichte der Amine wurde zudem der Tg und die Mechanik der Produktmischung verändert, was sich durch die Bildung von Urea / Amid Bindungen aus existierenden Ester und Urethanbindungen erklären lässt. Die Netzwerkdichte kann dabei entsprechend dem Einbaupunkt zu oder abnehmen.

| Beispiel | 5 | 6 | 7 | 8 |
|---|---|---|---|---|
| **Einsatzstoff** | **Gewicht [g]** | | | |
| Desmodur® N 3600 | 5,6 | 5,6 | 5,6 | 5,6 |
| HEMA | 4,4 | 4,4 | 4,4 | 4,4 |
| IBOMA | 50 | 50 | 50 | 50 |

(fortgesetzt)

| Beispiel | 5 | 6 | 7 | 8 |
|---|---|---|---|---|
| Einsatzstoff | Gewicht [g] | | | |
| HDDMA | 40 | 40 | 40 | 40 |
| IPDA | - | 2,98 | | |
| HDA | - | | 2,03 | |
| Jeffamine 403 | - | | | 5,14 |
| Omnirad 1173 | 3 | 3 | 3 | 3 |
| UV Härtung und Lagerung bei RT für 24h | | | | |
| Bewertung Film | fester Film | Amin nicht abreagiert, klebriger Film | Amin nicht abreagiert, klebriger Film | Amin nicht abreagiert, klebriger Film |
| IR, NH$_2$ (wagging) Signal bei 810 cm$^{-1}$ | - | sichtbar | sichtbar | sichtbar |

Es wurden weitere Vergleichs-Versuche mit Mischungen mit einer Urethandichte von < 5% und Lagerung von 24 Stunden bei Raumtemperatur durchgeführt. Hierbei zeigte sich bei dem Vergleichsfilm 5 ohne Amin ein fester Film. Bei den Vergleichsversuchen 6, 7 und 8 mit der Variation der Amine wurde das Amin nicht vollständig in den Film eingebunden. Nicht umgesetztes Amin konnte sowohl am Geruch als auch im Infrarotspektrum (IR), anhand der NH-Schwingungen (auch NH wagging oder NH$_2$ wagging genannt), deutlich nachgewiesen werden und äußerte sich in einer klebrigen Filmkonsistenz.

**Patentansprüche**

1.  Verfahren zur Herstellung eines Gegenstands, umfassend den Schritt der Herstellung des Gegenstands in einem additiven Herstellungsverfahren aus einem radikalisch vernetzbaren Aufbaumaterial, **dadurch gekennzeichnet, dass** das Aufbaumaterial eine Polyaminkomponente und eine Verbindung umfasst, die aus der Reaktion eines NCO-terminierten Polyisocyanurats mit einem, bezogen auf die freien NCO-Gruppen, molaren Überschuss eines Hydroxyalkyl(meth)acrylats erhältlich ist, dass der Gegenstand aus einem Vorläufer erhalten wird und dass das Verfahren die Schritte umfasst:

    I) Abscheiden von radikalisch vernetztem Aufbaumaterial auf einem Träger, so dass eine Lage eines mit dem Träger verbundenen Aufbaumaterials erhalten wird, welche einem ersten ausgewählten Querschnitt des Vorläufers entspricht;
    II) Abscheiden von radikalisch vernetztem Aufbaumaterial auf eine zuvor aufgetragene Lage des Aufbaumaterials, so dass eine weitere Lage des Aufbaumaterials erhalten wird, welche einem weiteren ausgewählten Querschnitt des Vorläufers entspricht und welche mit der zuvor aufgetragenen Lage verbunden ist;
    III) Wiederholen des Schritts II), bis der Vorläufer gebildet ist;

    wobei das Abscheiden von radikalisch vernetztem Aufbaumaterial wenigstens in Schritt II) durch Belichten und/oder Bestrahlen eines ausgewählten Bereichs eines radikalisch vernetzbaren Aufbaumaterials, entsprechend dem jeweils ausgewählten Querschnitt des Vorläufers, erfolgt und wobei das radikalisch vernetzbare Aufbaumaterial eine Viskosität (23 °C, DIN EN ISO 2884-1) von ≥ 5 mPas bis ≤ 100000 mPas aufweist und dass nach Schritt III) weiterhin Schritt IV) durchgeführt wird:
    IV) Erwärmen des nach Schritt III) erhaltenen Vorläufers auf eine Temperatur von ≥ 50 °C, so dass der Gegenstand erhalten wird.

2.  Verfahren gemäß Anspruch 1, **dadurch gekennzeichnet, dass**:

- der Träger innerhalb eines Behälters angeordnet ist und vertikal in Schwerkraftrichtung absenkbar ist,
- der Behälter das radikalisch vernetzbare Aufbaumaterial in einer Menge enthält, welche ausreicht, um wenigstens den Träger und eine in vertikaler Richtung gesehenen obersten Oberfläche von auf dem Träger abgeschiedenem vernetztem Aufbaumaterial zu bedecken,
- vor jedem Schritt II) der Träger um eine vorbestimmte Strecke abgesenkt wird, so dass über der in vertikaler Richtung gesehen obersten Lage des vernetzten Aufbaumaterials sich eine Schicht des radikalisch vernetzbaren Aufbaumaterials bildet und
- in Schritt II) ein Energiestrahl den ausgewählten Bereich der Schicht des radikalisch vernetzbaren Aufbaumaterials, entsprechend dem jeweils ausgewählten Querschnitt des Vorläufers, belichtet und/oder bestrahlt.

3. Verfahren gemäß Anspruch 1, **dadurch gekennzeichnet, dass**:

- der Träger innerhalb eines Behälters angeordnet ist und vertikal entgegen der Schwerkraftrichtung anhebbar ist,
- der Behälter das radikalisch vernetzbare Aufbaumaterial bereitstellt,
- vor jedem Schritt II) der Träger um eine vorbestimmte Strecke angehoben wird, so dass unter der in vertikaler Richtung gesehen untersten Lage des vernetzten Aufbaumaterials sich eine Schicht des radikalisch vernetzbaren Aufbaumaterials bildet und
- in Schritt II) eine Mehrzahl von Energiestrahlen den ausgewählten Bereich der Schicht des radikalisch vernetzbaren Aufbaumaterials, entsprechend dem jeweils ausgewählten Querschnitt des Vorläufers, gleichzeitig belichtet und/oder bestrahlt.

4. Verfahren gemäß Anspruch 1, **dadurch gekennzeichnet, dass**:

- in Schritt II) das radikalisch vernetzbare Aufbaumaterial aus einem oder mehreren Druckköpfen, entsprechend dem jeweils ausgewählten Querschnitt des Vorläufers, aufgetragen wird und anschließend belichtet und/oder bestrahlt wird.

5. Verfahren gemäß einem der Ansprüche 1 bis 4, **dadurch gekennzeichnet, dass** die Polyaminkomponente eine durchschnittliche Anzahl von Zerewitinoff-aktiven H-Atomen von $\geq 2$ aufweist.

6. Verfahren gemäß einem der Ansprüche 1 bis 5, **dadurch gekennzeichnet, dass** die Polyaminkomponente eine oder mehrere Verbindungen aus der Gruppe: Adipinsäuredihydrazid, Ethylendiamin, Diethylentriamin, Triethylentetramin, Tetraetylenpentamin, Pentaethylenhexamin, Dipropylentriamin, Hexamethylendiamin, Hydrazin, Isophorondiamin, (4,4'- und/oder 2,4'-)Diamino-dicyclohexylmethan, (4,4'- und/oder 2,4'-)Diamino-3,3'-dimethyldicyclohexylmethan und N-(2-Aminoethyl-)2-aminoethanol enthält.

7. Verfahren gemäß einem der Ansprüche 1 bis 6, **dadurch gekennzeichnet, dass** die Polyaminkomponente in einem Anteil von $\geq 0.1$ Gewichts-% bis $\leq 20$ Gewichts-%, bezogen auf das Gewicht des Aufbaumaterials, vorliegt.

8. Gegenstand, erhältlich durch ein Verfahren gemäß einem der Ansprüche 1 bis 7.

9. Gegenstand gemäß Anspruch 8, **dadurch gekennzeichnet, dass** das während und/oder nach der Herstellung des Gegenstands auf eine Temperatur von $\geq 50$ °C erwärmte Aufbaumaterial einen Harnstoffgruppengehalt von $\geq 0,1$ Gewichts-% bis $\leq 15$ Gewichts-% und/oder einen Amidgruppengehalt von $\geq 0,1$ Gewichts-% bis $\leq 10$ Gewichts-% aufweist.

10. Gegenstand gemäß Anspruch 8 oder 9, **dadurch gekennzeichnet, dass** das während und/oder nach der Herstellung des Gegenstands auf eine Temperatur von $\geq 50$ °C erwärmte Aufbaumaterial einen Schmelzpunkt (DSC) von $\geq 60$ °C aufweist.

11. Gegenstand gemäß einem der Ansprüche 8 bis 10, **dadurch gekennzeichnet, dass** das während und/oder nach der Herstellung des Gegenstands auf eine Temperatur von $\geq 50$ °C erwärmte Aufbaumaterial einen anderen Schmelzpunkt als das vor Beginn des erfindungsgemäßen Verfahrens vorliegende Aufbaumaterial aufweist.

12. Gegenstand gemäß einem der Ansprüche 8 bis 11, **dadurch gekennzeichnet, dass** das während und/oder nach der Herstellung des Gegenstands auf eine Temperatur von $\geq 50$ °C erwärmte Aufbaumaterial einen anderen E-Modul (ISO 527) als das vor Beginn des erfindungsgemäßen Verfahrens vorliegende Aufbaumaterial aufweist.

**Claims**

1. Method of producing an article, comprising the step of producing the article in an additive manufacturing method from a free-radically crosslinkable build material,

   **characterized in that**

   the build material comprises a polyamine component and a compound obtainable from the reaction of an NCO-terminated polyisocyanurate with a molar excess, based on the free NCO groups, of a hydroxyalkyl (meth)acrylate, **in that** the article is obtained from a precursor and

   **in that** the method comprises the following steps:

   I) depositing free-radically crosslinked build material on a carrier so as to obtain a layer of a build material bonded to the carrier and corresponding to a first selected cross section of the precursor;

   II) depositing free-radically crosslinked build material onto a previously applied layer of the build material so as to obtain another layer of the build material corresponding to another selected cross section of the precursor and bonded to the previously applied layer;

   III) repeating step II) until the precursor is formed;

   wherein the depositing of free-radically crosslinked build material at least in step II) is effected by exposure and/or irradiation of a selected region of a free-radically crosslinkable build material corresponding to the respectively selected cross section of the precursor and

   wherein the free-radically crosslinkable build material has a viscosity (23°C, DIN EN ISO 2884-1) of $\geq 5$ mPas to $\leq$ 100 000 mPas,

   and **in that** step III) is followed by a further step IV):

   IV) heating the precursor obtained after step III) to a temperature of $\geq 50°C$ to obtain the article.

2. Method according to Claim 1, **characterized in that**:

   - the carrier is arranged within a container and can be lowered vertically in the direction of gravity,

   - the container contains the free-radically crosslinkable build material in an amount sufficient to cover at least the carrier and an uppermost surface of crosslinked build material deposited on the carrier as viewed in the vertical direction,

   - before each step II) the carrier is lowered by a predetermined distance so that a layer of the free-radically crosslinkable build material is formed above the uppermost layer of the crosslinked build material as viewed in the vertical direction and

   - in step II) an energy beam exposes and/or irradiates the selected region of the layer of the free-radically crosslinkable build material corresponding to the respectively selected cross section of the precursor.

3. Method according to Claim 1, **characterized in that**:

   - the carrier is arranged within a container and can be raised vertically counter to the direction of gravity,

   - the container provides the free-radically crosslinkable build material,

   - before each step II) the carrier is raised by a predetermined distance so that a layer of the free-radically crosslinkable build material is formed below the lowermost layer of the crosslinked build material as viewed in the vertical direction and

   - in step II) a multitude of energy beams simultaneously exposes and/or irradiates the selected region of the layer of the free-radically crosslinkable build material corresponding to the respectively selected cross section of the precursor.

4. Method according to Claim 1, **characterized in that**:

   - in step II) the free-radically crosslinkable build material is applied from one or more print heads corresponding to the respectively selected cross section of the precursor and then is exposed and/or irradiated.

5. Method according to any of Claims 1 to 4, **characterized in that** the polyamine component has an average number of Zerewitinoff-active hydrogen atoms of $\geq 2$.

6. Method according to any of Claims 1 to 5, **characterized in that** the polyamine component contains one or more compounds from the group of: adipic dihydrazide, ethylenediamine, diethylenetriamine, triethylenetetramine, tetraethylenepentamine, pentaethylenehexamine, dipropylenetriamine, hexamethylenediamine, hydrazine, isophorone-diamine, (4,4'- and/or 2,4'-)diaminodicyclohexylmethane, (4,4'- and/or 2,4'-)diamino-3,3'-dimethyldicyclohexylmethane and N-(2-aminoethyl)-2-aminoethanol.

7. Method according to any of Claims 1 to 6, **characterized in that** the polyamine component is present in a proportion of ≥ 0.1% by weight to ≤ 20% by weight, based on the weight of the build material.

8. Article obtainable by a method according to any of Claims 1 to 7.

9. Article according to Claim 8, **characterized in that** the build material heated to a temperature of ≥ 50°C during and/or after the production of the article has a urea group content of ≥ 0.1% by weight to ≤ 15% by weight and/or an amide group content of ≥ 0.1% by weight to ≤ 10% by weight.

10. Article according to Claim 8 or 9, **characterized in that** the build material heated to a temperature of ≥ 50°C during and/or after the production of the article has a melting point (DSC) of ≥ 60°C.

11. Article according to any of Claims 8 to 10, **characterized in that** the build material heated to a temperature of ≥ 50°C during and/or after the production of the article has a different melting point than the build material present before commencement of the method of the invention.

12. Article according to any of Claims 8 to 11, **characterized in that** the build material heated to a temperature of ≥ 50°C during and/or after the production of the article has a different modulus of elasticity (ISO 527) than the build material present before commencement of the method of the invention.

**Revendications**

1. Procédé pour la fabrication d'un article, comportant l'étape de fabrication de l'article dans un procédé de fabrication additif à partir d'un matériau de construction réticulable par voie radicalaire, **caractérisé en ce que**

le matériau de construction comporte un composant polyamine et un composé qui peut être obtenu à partir de la réaction d'un polyisocyanurate à terminaison NCO avec un excès molaire, par rapport aux groupes NCO libres, d'un (méth)acrylate d'hydroxyalkyle,

**en ce que** l'article est obtenu à partir d'un précurseur et

**en ce que** le procédé comporte les étapes suivantes :

I) le dépôt de matériau de construction réticulé par voie radicalaire sur un support, de telle sorte qu'une strate d'un matériau de construction relié avec le support soit obtenue, qui correspond à une première section transversale sélectionnée du précurseur ;

II) le dépôt de matériau de construction réticulé par voie radicalaire sur une strate appliquée précédemment du matériau de construction, de telle sorte qu'une strate supplémentaire du matériau de construction soit obtenue, qui correspond à une section transversale sélectionnée supplémentaire du précurseur et qui est reliée avec la strate appliquée précédemment ;

III) la répétition de l'étape II) jusqu'à ce que le précurseur soit formé ;

le dépôt de matériau de construction réticulé par voie radicalaire au moins dans l'étape II) ayant lieu par exposition et/ou irradiation d'une zone sélectionnée d'un matériau de construction réticulable par voie radicalaire, conformément à la section transversale sélectionnée respective du précurseur, et

le matériau de construction réticulable par voie radicalaire présentant une viscosité (23 °C, DIN EN ISO 2884-1) de ≥ 5 mPas à ≤ 100 000 mPas,

et **en ce qu'**après l'étape III), l'étape IV) est en outre réalisée :

IV) le chauffage du précurseur obtenu selon l'étape III) à une température de ≥ 50 °C, de telle sorte que l'article soit obtenu.

2. Procédé selon la revendication 1, **caractérisé en ce que** :

- le support est agencé à l'intérieur d'un contenant et peut être abaissé verticalement dans la direction de la force de pesanteur,

- le contenant contient le matériau de construction réticulable par voie radicalaire en une quantité qui est suffisante pour recouvrir au moins le support et une surface la plus supérieure, telle que vue dans la direction verticale, du matériau de construction réticulé déposé sur le support,
- avant chaque étape II), le support est abaissé d'une distance prédéterminée, de telle sorte qu'une couche du matériau de construction réticulable par voie radicalaire se forme au-dessus de la strate la plus supérieure, telle que vue dans la direction verticale, du matériau de construction réticulé, et
- dans l'étape II), la zone sélectionnée de la couche du matériau de construction réticulable par voie radicalaire est exposée à et/ou irradiée avec un rayonnement d'énergie, conformément à la section transversale sélectionnée respective du précurseur.

3. Procédé selon la revendication 1, **caractérisé en ce que** :

- le support est agencé à l'intérieur d'un contenant et peut être soulevé verticalement à l'encontre de la direction de la force de pesanteur,
- le contenant fournit le matériau de construction réticulable par voie radicalaire,
- avant chaque étape II), le support est soulevé d'une distance prédéterminée, de telle sorte qu'une couche du matériau de construction réticulable par voie radicalaire se forme en dessous de la strate la plus inférieure, telle que vue dans la direction verticale, du matériau de construction réticulé, et
- dans l'étape II), la zone sélectionnée de la couche du matériau de construction réticulable par voie radicalaire est simultanément exposée à et/ou irradiée avec une pluralité de rayonnements d'énergie, conformément à la section transversale sélectionnée respective du précurseur.

4. Procédé selon la revendication 1, **caractérisé en ce que** :

- dans l'étape II), le matériau de construction réticulable par voie radicalaire est appliqué à partir d'une ou de plusieurs têtes d'impression, conformément à la section transversale sélectionnée respective du précurseur, et ensuite exposé et/ou irradié.

5. Procédé selon l'une quelconque des revendications 1 à 4, **caractérisé en ce que** le composant polyamine présente un nombre moyen d'atomes H actifs selon Zerewitinoff de $\geq 2$.

6. Procédé selon l'une quelconque des revendications 1 à 5, **caractérisé en ce que** le composant polyamine contient un ou plusieurs composés du groupe : dihydrazide d'acide adipique, éthylène-diamine, diéthylène-triamine, triéthylène-tétramine, tétraétylène-pentamine, pentaéthylène-hexamine, dipropylène-triamine, hexaméthylène-diamine, hydrazine, isophorone-diamine, (4,4'- et/ou 2,4'-)diamino-dicyclohexylméthane, (4,4'- et/ou 2,4'-)diamino-3,3'-diméthyldicyclohexylméthane et N-(2-aminoéthyl-)2-aminoéthanol.

7. Procédé selon l'une quelconque des revendications 1 à 6, **caractérisé en ce que** le composant polyamine est présent en une proportion de $\geq 0,1$ % en poids à $\leq 20$ % en poids, par rapport au poids du matériau de construction.

8. Article, pouvant être obtenu par un procédé selon l'une quelconque des revendications 1 à 7.

9. Article selon la revendication 8, **caractérisé en ce que** le matériau de construction chauffé pendant et/ou après la fabrication de l'article à une température de $\geq 50$ °C présente une teneur en groupes urée de $\geq 0,1$ % en poids à $\leq 15$ % en poids et/ou une teneur en groupes amide de $\geq 0,1$ % en poids à $\leq 10$ % en poids.

10. Article selon la revendication 8 ou 9, **caractérisé en ce que** le matériau de construction chauffé pendant et/ou après la fabrication de l'article à une température de $\geq 50$ °C présente un point de fusion (DSC) de $\geq 60$ °C.

11. Article selon l'une quelconque des revendications 8 à 10, **caractérisé en ce que** le matériau de construction chauffé pendant et/ou après la fabrication de l'article à une température de $\geq 50$ °C présente un autre point de fusion que le matériau de construction présent avant le début du procédé selon l'invention.

12. Article selon l'une quelconque des revendications 8 à 11, **caractérisé en ce que** le matériau de construction chauffé pendant et/ou après la fabrication de l'article à une température de $\geq 50$ °C présente un autre module E (ISO 527) que le matériau de construction présent avant le début du procédé selon l'invention.

**IN DER BESCHREIBUNG AUFGEFÜHRTE DOKUMENTE**

**In der Beschreibung aufgeführte Patentdokumente**

- EP 1648686 A

- WO 2015200173 A